# EUROPÄISCHE PATENTSCHRIFT

(11) **EP 2 052 894 B1**
(45) Veröffentlichungstag und Bekanntmachung des Hinweises auf die Patenterteilung: **30.05.2012**
(21) Anmeldenummer: 08017080.6
(22) Anmeldetag: 29.09.2008
(51) Int. Cl.: B60H 1/32

(54) **Klimaanlage und Verfahren zum Betrieb einer Klimaanlage**
Air conditioner and method for operating same
Climatisation et procédé destiné au fonctionnement d'une climatisation

(30) Priorität: 24.10.2007 DE 102007051127
(43) Veröffentlichungstag der Anmeldung: 29.04.2009
(73) Patentinhaber: Behr GmbH & Co. KG, 70469 Stuttgart (DE)
(72) Erfinder: Lochmahr, Karl, 71665 Vaihingen/Enz (DE); Baruschke, Wilhelm, 73117 Wangen (DE)
(74) Vertreter: Grauel, Andreas

(56) Entgegenhaltungen:
- EP-A- 1 640 195
- DE-A1- 19 526 946
- DE-B3- 10 232 352

## Beschreibung

In Betriebszuständen, in welchen eine hohe Leistung eines Hauptantriebsaggregates erforderlich ist, beispielsweise zur Beschleunigung eines Kraftfahrzeuges, ist es von Vorteil, die maximal zulässige Leistungsaufnahme von Nebenaggregaten, wie beispielsweise einem Kompressor einer Klimaanlage, zu begrenzen. Es gibt verschiedene regelungstechnische Ansätze, auf solche insbesondere kurzfristige Leistungsbegrenzungen zu reagieren, ohne den Komfort der Benutzer der Klimaanlage mehr als unvermeidlich einzuschränken. Je nach Betriebszustand und abhängig von einer Regeldifferenz, bestehend aus dem für den Betrieb der Klimaanlage gegebenen Solldrehmoment und dem tatsächlichen Antriebsmoment, kann aus mehreren verfügbaren Regelungsverfahren ein zur Erfüllung evtl. konkurrierender Vorgaben geeignetes Regelungsverfahren eingesetzt werden. Das Solldrehmoment wird üblicherweise von der Steuerung des Hauptantriebsaggregates über fahrzeuginterne Kommunikationskanäle vorgegeben, um beispielsweise den Rundlauf eines Verbrennungsmotors unter allen Umständen zu gewährleisten.

Nach einem aus DE10106243 bekannten Verfahren wird ein Kompressor eines Kältemittelkreislaufs einer Fahrzeugklimaanlage zur Begrenzung des Antriebsdrehmomentes derart betrieben, dass die Regelung des Antriebsdrehmomentes des Kompressors von einer Regelung der Verdampfertemperatur auf eine Regelung mit Sollwertvorgabe des Kältemitteldrucks unmittelbar nach dem Kompressor übergeht. In diesem Fall wird mit einer geeigneten Stellgröße zur Senkung der Pumpleistung des Kompressors sichergestellt, dass das maximal zulässige Antriebsdrehmoment nicht überschritten wird.

Nachteilig dabei ist die indirekte Methodik zur Begrenzung des Antriebsmoments über den Kältemittelhochdruck.

Nach dem aus dem nächstliegenden Stand der Technik, EP 1640195, bekannten Verfahren wird in der Klimaanlage ein Prozessfluid verschiedenen Temperatur- und Druckzuständen unterworfen. Um das Prozessfluid mit Druck zu beaufschlagen, weist die Klimaanlage einen Kompressor auf. Dieser wird mit einem Antriebsdrehmoment angetrieben. Zur Regelung der Klimaanlage wird dieses Antriebsdrehmoments Mᵢₛₜ mit einem gegebenen Solldrehmoment Mₛₒₗₗ verglichen. Das Ergebnis ist die sogenannte Regeldifferenz. Anschließend wird abhängig von dieser Regeldifferenz eine Stellgröße gebildet, welche die Förderleistung des Kompressors durch Veränderung des Hubvolumens anpasst. Das sorgt für die Annäherung des Antriebsdrehmomentes an das Solldrehmoment, so dass sich die Regeldifferenz verringert bzw. ggf. zu Null wird.

Dabei wird das Antriebsmoment aus mindestens einem Prozessparameter der Klimaanlage sowie mindestens einer Kenngröße der Umgebungsbedingungen und/oder des Prozessfluides ermittelt.

Das errechnete Antriebsdrehmoment ist üblicherweise zeitlichen Schwankungen unterworfen. Es ist die Aufgabe der Erfindung, den Betrieb der Klimaanlage zu verbessern und die genannten nachteile zu vermeiden. Diese Aufgabe wird durch ein Verfahren mit den Merkmalen des Anspruchs 1 gelöst. Anspruch 3 stellt eine entsprechende Klimaanlage zur Durchführung eines solchen Verfahrens unter Schutz.

Als Prozessparameter der Klimaanlage werden beispielsweise die Drehzahl des Kompressors, die Temperatur des Verdampfers, der Kältemittelhochdruck nach Kompressor, die durch das Gebläse am Verdampfer beförderte Luftmenge und die durch den Lüfter am Kondensator beförderte Luftmenge verwendet. Als Kenngrößen der Umgebungsbedingungen werden beispielsweise die Lufteintrittstemperatur und die Lufteintrittsfeuchte vor Verdampfer verwendet.

Die Klimaanlage weist erfindungsgemäß einen Kompressor, einen Kondensator oder ein Gaskühler zur Wärmeabgabe, ein Expansionsventil zur insbesondere adiabaten Entspannung des Prozessfluides und einen Verdampfer zur Wärmeaufnahme auf. Diese Komponenten der Klimaanlage sind mit Leitungen (nach folgend Hochdruckkanal bzw. -leitung und Niederdruckkanal bzw. Saugdruckleitung) verbunden, durch die das Prozessfluid strömt.

Das Prozessfluid kann insbesondere ein Kältemittel sein, welches während des Umlaufes verschiedene Temperatur- und Druckzustände annimmt, beispielsweise eines der Kältemittel mit den Bezeichnungen R134a oder R744. Je nach Art des Kältemittels können die genannten Komponenten der Klimaanlage ausgewählt oder ergänzt werden.

Die Förderleistung der mechanisch vom Verbrennungsmotor angetriebenen Kompressors kann bauartspezifisch an die erforderliche Kühlleistung der Klimaanlage angepasst werden.

Die Berechnung des Antriebsdrehmomentes Mᵢₛₜ geschieht vorteilhafterweise über beispielsweise empirisch ermittelte Kennfelder bzw. Kennlinien in Abhängigkeit der genannten physikalischen Größen.

Erfindungsgemäß wird der Verlauf des Antriebsdrehmomentes über der Zeit zur Erhöhung der Stabilität des Regelverhaltens gefiltert, vorzugsweise mit einem Tiefpassfilter.

Für den Betrieb der Klimaanlage wird bevorzugt von der Steuerung des Antriebsstrangs ein Sollgrenzdrehmoment vorgegeben, damit der Rundlauf des Verbrennungsmotors gewährleistet ist. Dieses Sollgrenzdrehmoment variiert stark in Abhängigkeit von Betriebszuständen des Antriebsstrangs. Das modellierte Antriebsdrehmoment des Kompressors wird dahingehend geregelt, dass das Sollgrenzdrehmoment zu fast oder zu möglichst keinem Zeitpunkt überschritten wird.

Dazu wird eine Regeldifferenz bestehend aus Antriebsdrehmoment und Solldrehmoment gebildet. Abhängig von dieser Differenz erhält der Kompressor die aktualisierte Stellgröße zur Anpassung der Förderleistung. Diese Stellgröße führt bei Bedarf zu einem verringerten Antriebsdrehmoment, bis das Solldrehmoment erreicht und die Regeldifferenz ausreichend reduziert ist und sich vorzugsweise an den Wert 0 annähert.

Dieses Verfahren begrenzt die Kompressorleistung nur bei Bedarf und nur soweit wie nötig, um den Komfort für die Benutzer nicht mehr als unvermeidlich zu beeinträchtigen und eine komplette Abschaltung der Klimaanlage möglichst zu vermeiden. Die Fahrbarkeit wird so durch die Klimaanlage nicht nachteilig beeinflusst.

Die Erfindung wird im Folgenden anhand von Ausführungsbeispielen unter Bezugnahme auf die Zeichnungen erläutert. Hierzu zeigen:
- Fig. 1: ein Blockschaltbild für die Klimaanlage nach einer ersten Ausführungsform der Erfindung für das Kältemittel R134a, und
- Fig. 2: ein Blockschaltbild für eine Klimaanlage nach einer zweiten Ausführungsform der Erfindung für das Kältemittel R744.

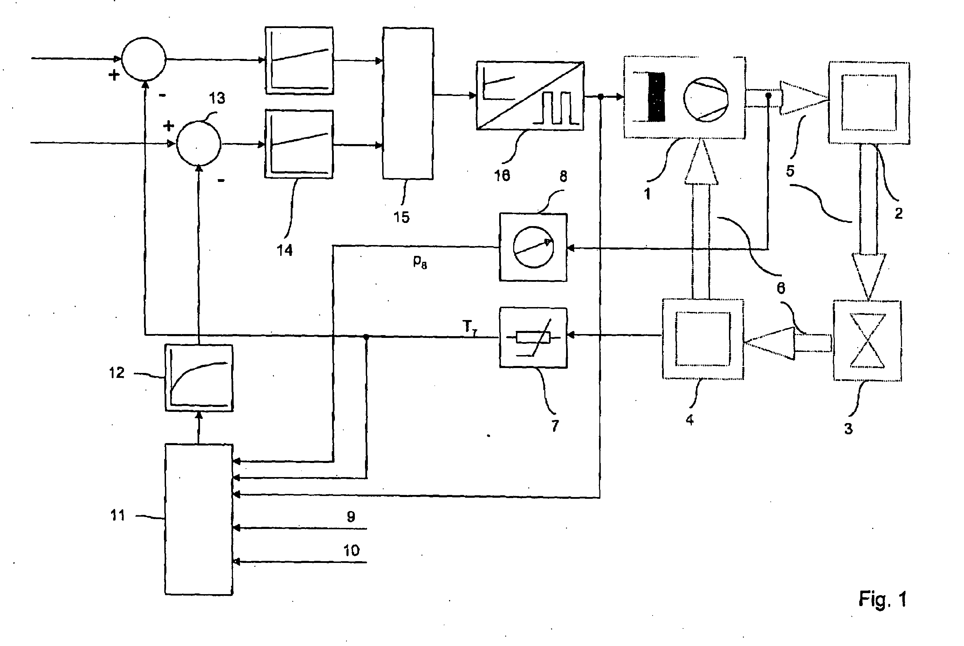

Die in Fig. 1 dargestellte Klimaanlage weist als Bestandteile des Kältemittelkreislaufs (gestrichelt dargestellt) einen Kompressor 1, einen Kondensator 2, ein Expansionsventil 3 und einen Verdampfer 4 auf, die durch Kältemittelleitungen miteinander verbunden sind. Eine Hochdruckleitung 5 verbindet den Kompressor 1, den Kondensator 2 und das Expansionsventil 3. Eine Saugdruckleitung 6 verbindet das Expansionsventil 3, den Verdampfer 4 und den Kompressor 1. Hier ist ein Kompressor mit variablem Hubvolumen gewählt, beispielsweise ein Axialkolbenverdichter oder Taumelscheibenverdichter.

Von der Sensoreinrichtung 7 wird die Lufttemperatur nach Verdampfer T₇, von der Sensoreinrichtung 8 der Druck P₈ des Kältemittels in der Hochdruckleitung nach Kompressor, von der Sensoreinrichtung 9 die Drehzahl des Kompressors nₖₒₘₚ, von der Sensoreinrichtung 10 die Temperatur der Umgebungsluft erfasst und an die Recheneinrichtung 11 übermittelt. Von weiteren hier nicht dargestellten Sensoreinrichtungen werden Feuchte der Umgebungsluft, die beförderten Luftmengen des Kondensator- und des Verdampfergebläses erfasst und ebenfalls an die Recheneinrichtung 11 übermittelt.

Der Recheneinrichtung 11 modelliert über Kennfelder und/oder Kennlinien in Echtzeit das gegenwärtige Antriebsdrehmoment.

Der Verlauf des Antriebsdrehmomentes wird zur Stabilisierung des Regelverhaltens von einem PT1-Filter 12 geglättet. Die Vergleichseinrichtung 13 verarbeitet das gefilterte Signal des Antriebsdrehmomentes mit dem gegebenen Solldrehmoment zur Regeldifferenz durch Subtraktion der Größen. Die Regeldifferenz wird von einem Drehmomentregler 14 zu der Stellgröße für den Kompressor 1 verarbeitet.

Je nach Betriebszustand aktiviert eine von der Recheneinheit 11 betriebene Drehmomentüberwachungsfunktion 15 entweder die hier nicht beschriebene Verdampfertemperaturregelung oder die Regelung zur Begrenzung des Antriebsdrehmomentes. Solange das vom Antriebsstrang zur Verfügung gestellte Antriebsdrehmoments den Bedarf der Klimaanlage überschreitet, aktiviert die Drehmomentüberwachungsfunktion die Verdampfertemperaturregelung. Reicht das vom Antriebsstrang zur Verfügung gestellte Antriebsdrehmoment zum Betrieb der Klimaanlage nicht mehr aus, so begrenzt die Drehmomentüberwachungsfunktion das Antriebsdrehmoment. Die Drehmomentüberwachungsfunktion lässt somit stets die kleinere der beiden Steilgrößen zur Verarbeitung durch den Umsetzer 16 durch.

Die Drehmomentüberwachungsfunktion gibt ihre Anweisung an einen Umsetzer 16 weiter, der ein nicht dargestelltes Regelventil zur Steuerung des Kompressors mit einem pulsweitenmodulierten Spannungssignal versorgt, oder mit einem entsprechenden Stromsignal.

Die o. g. Bestandteile 11 - 16 der Regelung und die nicht nummerierten Bestandteile der Verdampfertemperaturregelung können vorteilhaft in einem Mikrokontroller implementiert sein.

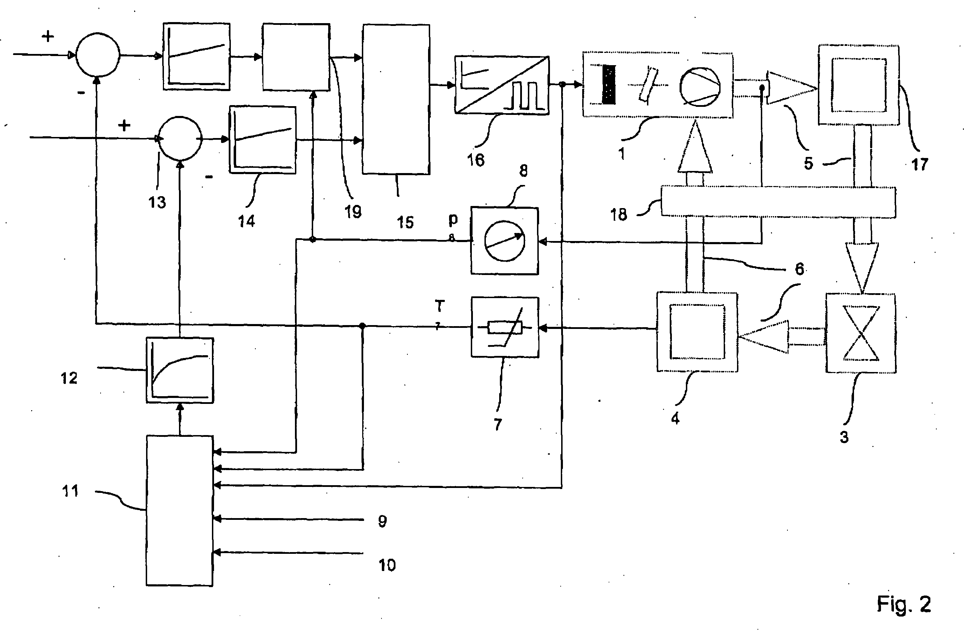

Fig. 2 stellt das Blockschaltbild eines zweiten Ausführungsbeispiels einer erfindungsgemäßen Klimaanlage dar, die mit CO₂ (R744) als Kältemittel arbeitet. Mit der ersten Ausführung übereinstimmende Merkmale sind durch gleiche Bezugszeichen benannt, so dass nachfolgend nur auf die Unterschiede zur ersten Ausführung eingegangen wird. Der Aufbau ist an die physikalischen Eigenschaften des Kältemittels angepasst. Der Kondensator arbeitet hier als Gaskühler 17. Ein innerer Wärmetauscher 18 ist zwischen einerseits Kompressor 1 und Gaskühler 17 sowie anderseits Expansionsventil 3 und Verdampfer 4 angeordnet. Weiterhin weist dieses System einen unterlagerten Hochdruckregler 19 mit Störgrößenaufschaltung auf.

## Patentansprüche

1. Verfahren zum Betrieb einer Klimaanlage, insbesondere für ein Kraftfahrzeug, in welcher ein Prozessfluid verschiedenen Temperatur- und Druckzuständen unterworfen wird, und welche zur Druckbeaufschlagung des Prozessfluides einen Kompressor (1) aufweist, der mit einem Antriebsdrehmoment (Mᵢₛₜ) angetrieben wird, wobei das Antriebsdrehmoment mit einem Solldrehmoment (Mₛₒₗₗ) verglichen wird und aus diesem Vergleichswert eine Stellgröße für die Regelung des Antriebs des Kompressors bestimmt wird, wobei das Antriebsdrehmoment aus mindestens einem Prozessparameter der Klimaanlage sowie mindestens einer Kenngröße der Umgebungsbedingungen und/oder des Prozessfluides ermittelt wird, **dadurch gekennzeichnet, dass** der zeitliche Verlauf des errechneten Antriebsdrehmomentes vor dem Vergleich mit dem Solldrehmoment zur Erhöhung der Regelstabilität gefiltert wird.

2. Verfahren nach einem der vorhergehenden Ansprüche, **dadurch gekennzeichnet, dass** der zeitliche Verlauf des errechneten Antriebsdrehmomentes vor dem Vergleich mit dem Solldrehmoment zur Erhöhung der Regelstabilität mit einem Tiefpassfilter gefiltert wird.

3. Klimaanlage, insbesondere für ein Kraftfahrzeug, die gemäß Anspruch 1 betrieben wird, welche wenigstens einen gesteuerten Kompressor (1), einen Kondensator (2), ein Expansionsventil (3), einen Verdampfer (4), mindestens eine Sensorseinrichtung zur Erfassung wenigstens eines Prozessparameters der Klimaanlage sowie mindestens einer Recheneinrichtung, wobei die Kenngrößen der Umgebungsbedingungen und des Prozessfluides sowie ein Programm mit wenigstens einem Algorithmus zur Berechnung des Antriebsdrehmoments hinterlegt sind, aus denen die Recheneinrichtung (10) mit den Prozessparametern das Antriebsdrehmoment ermittelt, **dadurch gekennzeichnet, dass** der zeitliche Verlauf des errechneten Antriebsdrehmoments vor dem Vergleich mit dem Solldrehmoment zur Erhöhung der Regelstabilität gefiltert wird.

4. Klimaanlage nach Anspruch 3, **dadurch gekennzeichnet, dass** die Förderleitung des Kompressors durch die Änderung seines Hubvolumens an den Bedarf angepasst wird.

5. Klimaanlage nach einem der vorhergehenden Ansprüche 3 bis 4, **dadurch gekennzeichnet, dass** der Kompressor als Axialkolbenverdichter, vorzugsweise als Taumelscheibenverdichter ausgebildet ist.

6. Klimaanlage nach einem der vorhergehenden Ansprüche 3 bis 5 **dadurch gekennzeichnet, dass** das Expansionsventil (3) als adiabate Drossel ausgebildet ist.

7. Klimaanlage nach einem der vorhergehenden Ansprüche 3 bis 6, **dadurch gekennzeichnet, dass** die Bestandteile (11 - 16) der Regelung in einem Mikrocontroller implementiert sind.

8. Klimaanlage nach einem der vorhergehenden Ansprüche 3 bis 7, **dadurch gekennzeichnet, dass** die Klimaanlage mit dem Kühlmittel R134a betrieben wird.

9. Klimaanlage nach einem der vorhergehenden Ansprüche 3 bis 8, **dadurch gekennzeichnet, dass** die Klimaanlage mit dem Kühlmittel R744 betrieben wird.

## Claims

1. A method for operating an air conditioning system, particularly for a motor vehicle, in which a process fluid is subjected to various temperature and pressure states, and which has a compressor (1) for applying pressure to the process fluid, said compressor being driven with a drive torque (M_{IST}), wherein the drive torque is compared with a target torque (Mₛₒₗₗ) and the resulting comparative value is used for determining a correcting variable for controlling the drive of the compressor, wherein the drive torque is determine from at least one process parameter of the air conditioning system and at least one characteristic value of the surrounding conditions and/or of the process fluid, **characterized in that** the course over time of the calculated drive torque is filtered prior to comparison with the target torque for the purpose of increasing control stability.

2. The method according to any one of the preceding claims, **characterized in that** the course over time of the calculated drive torque is filtered using a low-pass filter prior to comparison with the target torque for the purpose of increasing control stability.

3. An air conditioning system, particularly for a motor vehicle, which is operated according to claim 1, and which [comprises] at least one controlled compressor (1), one condenser (2), one expansion valve (3), one evaporator (4), at least one sensor device for detecting at least one process parameter of the air conditioning system, and at least one computing unit, wherein the characteristic values of the surrounding conditions and of the process fluid, along with a program having at least one algorithm for calculating the drive torque, are stored, from which the computing unit (10) uses the process parameters to determine the drive torque, **characterized in that** the course over time of the calculated drive torque is filtered prior to comparison with the target torque for the purpose of increasing control stability.

4. The air conditioning system according to claim 3, **characterized in that** the pumping output of the compressor is adjusted as needed by adjusting its displacement volume.

5. The air conditioning system according to any one of the preceding claims 3 to 4, **characterized in that** the compressor is embodied as an axial piston compressor, preferably as a wobble plate compressor.

6. The air conditioning system according to any one of the preceding claims 3 to 5, **characterized in that** the expansion valve (3) is embodied as an adiabatic throttling valve.

7. The air conditioning system according to any one of the preceding claims 3 to 6, **characterized in that** the control components (11-16) are implemented in a microcontroller.

8. The air conditioning system according to any one of the preceding claims 3 to 7, **characterized in that** the air conditioning system is operated using R134a cooling medium.

9. The air conditioning system according to any one of the preceding claims 3 to 8, **characterized in that** the air conditioning system is operated using R744 cooling medium.

## Revendications

1. Procédé de fonctionnement d'un système de climatisation, en particulier pour un véhicule automobile, système de climatisation dans lequel un fluide de processus est soumis à différents états de température et de pression et qui présente un compresseur (1) servant à l'alimentation en pression du fluide de processus, lequel compresseur est entraîné en ayant un couple d'entraînement (M_{réel}), où le couple d'entraînement est comparé à un couple théorique (M_{théorique}) et, à partir de cette valeur comparative, on détermine une grandeur réglante pour le réglage de l'entraînement du compresseur, où le couple d'entraînement est déterminé à partir d'au moins un paramètre de processus du système de climatisation et d'au moins une grandeur caractéristique des conditions d'environnement et / ou du fluide de processus,
**caractérisé en ce que** l'évolution dans le temps, du couple d'entraînement calculé, avant la comparaison avec le couple théorique, est filtrée pour augmenter la stabilité de réglage.

2. Procédé selon la revendications précédente, **caractérisé en ce que** l'évolution dans le temps, du couple d'entraînement calculé, avant la comparaison avec le couple théorique, est filtrée avec un filtre passe-bas pour augmenter la stabilité de réglage.

3. Système de climatisation, en particulier pour un véhicule automobile, qui est actionné conformément à la revendication 1, lequel système de climatisation comprend au moins un compresseur piloté (1), un condenseur (2), un détenteur (3), un évaporateur (4), au moins un dispositif à capteurs servant à la détention d'au moins un paramètre de processus du système de climatisation, ainsi qu'au moins un dispositif de calcul, où sont stockées en mémoire des données telles que les grandeurs caractéristiques des conditions d'environnement et du fluide de processus, ainsi qu'un programme comportant au moins un algorithme servant au calcul du couple d'entraînement, données à partir desquelles le dispositif de calcul (10), avec les paramètres de processus, calcule le couple d'entraînement,
**caractérisé en ce que** l'évolution dans le temps, du couple d'entraînement calculé, avant la comparaison avec le couple théorique, est filtrée pour augmenter la stabilité de réglage.

4. Système de climatisation selon la revendication 3, **caractérisé en ce que** le débit du compresseur est adapté aux besoins, par la modification de la cylindrée dudit compresseur.

5. Système de climatisation, selon l'une des revendications précédentes 3 ou 4, **caractérisé en ce que** le compresseur est conçu comme un compresseur à piston axial, de référence comme un compresseur à plateau oscillant.

6. Système de climatisation, selon l'une quelconque revendications précédentes 3 à 5, **caractérisé en ce que** le détenteur (3) est conçu comme un étranglement adiabatique.

7. Système de climatisation selon l'une quelconque des revendications précédentes 3 à 6, **caractérisé en ce que** les composants (11 - 16) de la régulation sont mis en oeuvre dans un microprocesseur.

8. Système de climatisation, selon l'une quelconque des revendications précédentes 3 à 7, **caractérisé en ce que** le système de climatisation fonctionne avec le fluide frigorigène R134a.

9. Système de climatisation selon l'une quelconque des revendications précédentes 3 à 8, **caractérisé en ce que** le système de climatisation fonctionne avec le fluide frigorigène R744.
